# FASCICULE DE BREVET EUROPEEN

(11) **EP 0 857 885 B1**
(45) Date de publication et mention de la délivrance du brevet: **16.10.2002**
(21) Numéro de dépôt: 98101887.2
(22) Date de dépôt: 04.02.1998
(51) Int. Cl.: F16D 69/00

(54) **Procédé de réalisation d'une garniture de frottement annulaire, garniture obtenue selon le procédé et installation pour la mise en oeuvre selon le procédé**
Verfahren zur Herstellung eines ringförmigen Reibbelages, gemäss dem Verfahren erhaltener Reibbelag und Einrichtung zum Herstellen nach diesem Verfahren
Procedure for the manufacture of an annular friction lining, lining produced according to this procedure and installation for the manufacture according to this procedure

(30) Priorité: 07.02.1997 FR 9701530
(43) Date de publication de la demande: 12.08.1998
(73) Titulaire: VALEO, 75017 Paris (FR)
(72) Inventeur: Kierbel, David, 14000 Caen (FR); Legrand, Claude, 14110 Conde Sur Noireau (FR); Adamczak, Loîc, 61800 Montsecret (FR); Rommeru, Cécile, 87000 Limoges (FR)
(74) Mandataire: Lemaire, Marc

(56) Documents cités:
- EP-A- 0 625 647
- WO-A-95/26473
- FR-A- 2 607 886

## Description

La présente invention concerne un procédé de réalisation d'une garniture de frottement annulaire.

L'invention concerne plus particulièrement une garniture de frottement se présentant sous la forme d'un anneau plan ou d'un tronc de cône et le dispositif qui en est équipé est un disque d'embrayage ou de frein, notamment de boîte de vitesses automatique et y associé, fonctionnant dans l'huile, ou un anneau ou cône de synchronisation de boîte de vitesses à commande manuelle fonctionnant également dans l'huile, un tel dispositif étant installé à bord d'un véhicule automobile.

L'invention concerne notamment la réalisation d'une garniture de frottement du type réalisé à partir d'un matériau de frottement constitué par un mat de fibres imprégné d'une résine thermodurcissable qui fait l'objet du document WO-A-95/26.473.

On connaît différents procédés de réalisation d'une garniture de frottement de forme annulaire plate qui font appel à des étapes de découpe de la garniture de frottement, en une seule pièce ou en tronçons, qui aboutissent à des chutes de découpe trop importantes et coûteuses.

Afin de remédier à cet inconvénient, l'invention propose un procédé de réalisation d'une garniture de frottement de forme générale annulaire, caractérisé en ce qu'il consiste à:
- réaliser une bande rectiligne de matériau de frottement dont la largeur est sensiblement égale à la largeur finale de la garniture de frottement; puis
- déformer la bande rectiligne pour la conformer en un anneau continu.

Selon d'autres caractéristiques de l'invention :
- après avoir conformé la bande en anneau, le procédé consiste à recevoir la bande annulaire dans un guide de forme complémentaire;
- après avoir conformé la bande en anneau, le procédé consiste à découper simultanément les bords circulaires de la bande annulaire pour obtenir une bande annulaire de largeur constante déterminée;
- après avoir conformé la bande en anneau, le procédé consiste à tronçonner un secteur de bande annulaire correspondant à une circonférence complète, puis à en rabouter les extrémités adjacentes;
- la bande rectiligne est déformée en la faisant passer entre deux rouleaux coniques adjacents à axes concourants;
- la bande rectiligne de matériau de frottement est réalisée à partir d'un matériau de frottement destiné à équiper un dispositif mettant en oeuvre un frottement, plus particulièrement un disque d'embrayage ou de frein, qui est constitué par un mat de fibres imprégnées d'une résine de type thermodurcissable;
- le matériau de frottement est destiné plus particulièrement à équiper un dispositif mettant en oeuvre un frottement en milieu liquide tel que, plus particulièrement, un disque d'embrayage ou de frein, notamment de boîte de vitesses automatique ou y associé, un anneau ou cône de synchronisation de boîte de vitesses à commande manuelle.
- la garniture de frottement est une garniture annulaire plane;
- la garniture de frottement est une garniture annulaire tronconique.

L'invention propose aussi une garniture de frottement de forme générale annulaire, caractérisée en ce qu'elle est obtenue grâce au procédé selon l'invention.

L'invention propose enfin une installation pour la mise en oeuvre du procédé selon l'invention caractérisée en ce qu'elle comporte un poste de déformation de la bande rectiligne de matériau de frottement qui comporte deux rouleaux coniques adjacents et d'axes concourants situés dans un plan perpendiculaire au plan de défilement de la bande rectiligne et entre lesquels passe la bande.

L'installation selon l'invention comporte, en amont du poste de déformation, un poste de mise sous tension longitudinale qui comporte deux rouleaux cylindriques d'axes parallèles concourants situés dans un plan perpendiculaire au plan de défilement de la bande rectiligne et entre lesquels passe la bande.

D'autres caractéristiques et avantages de l'invention apparaîtront à la lecture de la description détaillée qui suit pour la compréhension de laquelle on se reportera aux dessins annexés dans lesquels :
- la figure 1 est un schéma illustrant un premier procédé de réalisation d'une garniture de frottement selon l'état de la technique;
- la figure 2 est un schéma illustrant un second procédé de réalisation d'une garniture de frottement selon l'état de la technique;
- la figure 3 est un schéma illustrant un tronçon de bande rectiligne de matériau de frottement utilisé pour la mise en oeuvre du procédé conforme aux enseignements de l'invention;
- la figure 4 est un schéma illustrant le tronçon de la figure 3 après qu'une partie ait été déformé tangentiellement;
- la figure 5 est une vue schématique illustrant une garniture de frottement réalisée selon le procédé conforme aux enseignements de l'invention;
- la figure 6 est une vue schématique qui illustre en perspective les deux postes principaux d'une installation pour la mise oeuvre du procédé selon l'invention; et
- la figure 7 est une vue de dessus qui illustre schématiquement une installation plus complète pour la mise en oeuvre du procédé selon l'invention.

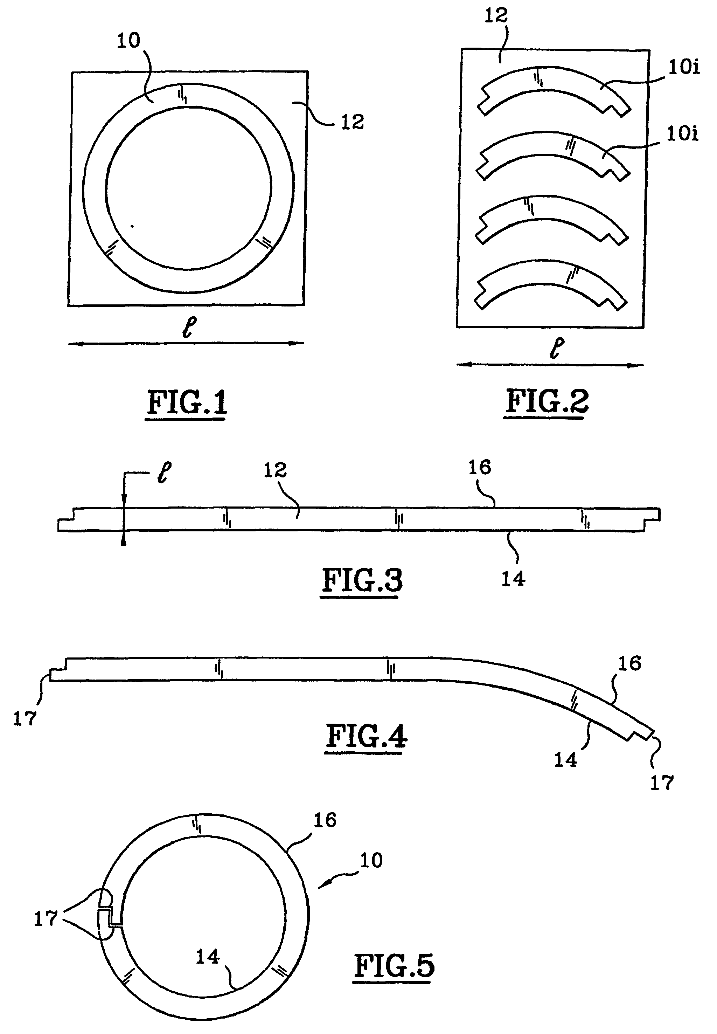

On a représenté à la figure 1 une garniture de frottement 10 de forme générale annulaire plate qui est réalisée par découpe d'une forme annulaire complète dans une bande 12 de matériau de frottement qui est par exemple un mat de fibres imprégné d'une résine thermodurcissable.

Pour connaître de manière approfondie la structure, la composition et la mise en oeuvre d'un tel matériau de base, on peut se reporter aux enseignements du document WO-A-95/26.473.

Comme on peut le voir à la figure 1, cette technique nécessite de disposer d'une bande dont la largeur "I" est au moins égale au diamètre extérieur de la garniture de frottement, et les chutes résultant de l'opération de découpe de l'ébauche de la garniture de frottement sont très importantes.

Afin de limiter ces chutes de matériau de frottement, on a proposé la technique illustrée à la figure 2 selon laquelle chaque garniture est réalisée en plusieurs tronçons 10i, par exemple au nombre de quatre. Les chutes après découpe dans la bande 12 sont réduites et la larguer "I" aussi, mais il est alors nécessaire de procéder à des opérations d'assemblage par raccordement des quatre tronçons pour constituer l'ébauche annulaire qui va ensuite subir les opérations de moulage et de cuisson.

Comme on peut le voir en se reportant aux figures 3 à 6, la conception selon l'invention permet d'utiliser une bande de matériau 12 dont la largeur "I" est très légèrement supérieur ou égale à la largeur finale de la garniture annulaire 10.

Cette bande de matériau de frottement de largeur réduite est délimitée par deux bords longitudinaux parallèles 14 et 16 dont l'un constitue, après conformation par déformation, le bord circulaire intérieur de la garniture de frottement et dont l'autre constitue le bord circulaire extérieur.

Le procédé de réalisation selon l'invention consiste à conformer progressivement le tronçon de bande rectiligne 12 de façon à aboutir à un anneau fermé dont il suffit ensuite de rabouter les deux extrémités adjacentes 17 et de formes complémentaires.

Ainsi, à partir d'une bande continue de largeur réduite, on obtient sans chutes importantes de découpe une ébauche d'une garniture de frottement annulaire.

L'opération de conformation par déformation est rendue possible par la structure du matériau de frottement avant sa cuisson qui est étirable et elle consiste essentiellement à le déformer tangentiellement, c'est à dire à étirer davantage le matériau dans le sens longitudinal au voisinage de son bord 16.

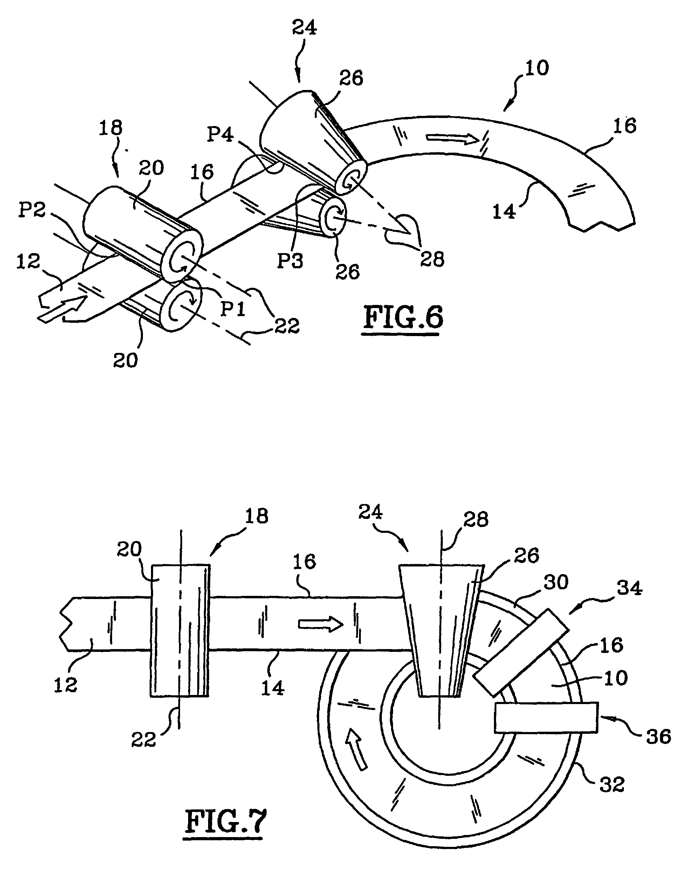

A cet effet on utilise des moyens qui sont schématisés à la figure 6.

La bande rectiligne 12 à bords droits et parallèles 14 et 16 passe d'abord à un premier poste 18 qui comporte deux rouleaux cylindriques circulaires 20 dont les axes 22 sont parallèles entre eux et s'étendent dans un plan vertical qui est perpendiculaire au plan dans lequel défile la bande 12 qui passe entre les deux rouleaux cylindriques 20 qui sont entraînés en sens inverses mais à la même vitesse.

Ce premier poste 18 permet d'entraîner la bande 12 à vitesse constante en maîtrisant parfaitement sa vitesse de défilement et en maintenant les bords 14 et 16 parallèles à la direction de défilement.

La bande rectiligne 12 passe ensuite dans un poste 24 de conformation qui comporte deux rouleaux coniques 26 dont les axes 28 sont concourants et s'étendent dans un plan vertical perpendiculaire au plan de défilement de la bande 12.

Les rouleaux coniques 26 tournent en sens inverses à la même vitesse et la bande 12 passe entre les rouleaux 26.

Les vitesses de rotation et les dimensions des rouleaux cylindriques 20 et coniques 26 sont telles que les vitesses tangentielles, au niveau du contact des rouleaux avec la bande 12, sont égales aux points P1, P2 et P3.

Par contre, du fait de la forme conique des rouleaux 26, la vitesse tangentielle au point P4 est nettement supérieure à celle au point P3, cette vitesse augmentant entre les points P3 et P4 proportionnellement au rayon du cône au point considéré.

En passant entre les rouleaux 26 du poste 24, la bande est ainsi étirée progressivement selon la direction longitudinale de son bord 14 à son bord 16 ce qui aboutit, par étirage, à la conformer en anneau à la sortie du poste 24.

Comme on peut le voir à la figure 7, l'installation comporte, en aval du poste 24, un chemin de réception 30 de forme annulaire qui guide, par exemple avec des moyens de roulement, l'ébauche annulaire en formation de la garniture de frottement 10.

L'installation comporte aussi un poste de découpe 34 qui découpe les bords circulaires intérieur 14 et extérieur 16 de façon à obtenir une garniture de frottement annulaire 10 de la largeur précise souhaitée.

Ensuite, l'anneau en formation est repris par un guide hélicoïdal 32 en passant par un poste 36 de tronçonnage et de raccordement. Lorsque la bande conformée en anneau a fait une circonférence complète, son extrémité est reprise par le poste 34. La bande est tronçonnée dans le sens travers et un point de colle permet de réunir les extrémités 17 de l'anneau ainsi formé. Le guide 32 est escamotable par pivotement pour permettre de sortir l'anneau constituant l'ébauche de la garniture de frottement annulaire 10.

Les guides 30 et 32 peuvent bien entendu être de forme tronconique pour permettre la réalisation de garniture de frottement annulaires plates tronconiques.

Chaque ébauche est ensuite, selon une technique connue, placée dans un moule qui présente, selon l'équipement auquel est destinée la garniture de frottement, un fond plat ou tronconique ou toute autre forme rainurée ou non.

## Revendications

1. Procédé de réalisation d'une garniture de frottement (10) de forme générale annulaire, **caractérisé en ce qu'**il consiste à :
- réaliser une bande rectiligne (12) de matériau de frottement dont la largeur (I) est sensiblement égale à la largeur finale de la garniture de frottement; puis
- déformer la bande rectiligne pour la conformer en un anneau continu (10).

2. Procédé selon la revendication 1, **caractérisé en ce qu'**il consiste, après avoir conformé la bande en anneau, à :
- recevoir la bande annulaire dans un chemin de réception (30, 32) de forme annulaire.

3. Procédé selon l'une des revendications 1 ou 2, **caractérisé en ce qu'**il consiste, après avoir conformé la bande en anneau, à :
- découper simultanément les bords circulaires (14,16) de la bande annulaire pour obtenir une bande annulaire (10) de largeur constante déterminée.

4. Procédé selon l'une quelconque des revendications 1 à 3, **caractérisé en ce qu'**il consiste, après avoir conformé la bande en anneau (10), à :
- tronçonner un secteur de bande annulaire correspondant à une circonférence complète; puis
- en rabouter les extrémités adjacentes (17).

5. Procédé selon l'une quelconque des revendications précédentes, **caractérisé en ce que** la bande rectiligne (12) est déformée en la faisant passer entre deux rouleaux coniques adjacents (26) à axes (28) concourants.

6. Procédé selon l'une quelconque des revendications précédentes, **caractérisé en ce que** la bande rectiligne (12) de matériau de frottement est réalisée à partir d'un matériau de frottement constitué par un mat de fibres imprégnées d'une résine de type thermodurcissable.

7. Procédé selon la revendication précédente, **caractérisé en ce que** le matériau de frottement est destiné à équiper un dispositif mettant en oeuvre un frottement en milieu liquide.

8. Procédé selon l'une quelconque des revendications précédentes, **caractérisé en ce que** la garniture de frottement (10) est une garniture annulaire plane.

9. Procédé selon l'une quelconque des revendications 1 à 7, **caractérisé en ce que** la garniture de frottement (10) est une garniture annulaire tronconique.

10. Procédé selon l'une quelconque des revendications précedentes **caractérisé en ce que** le matériau de frottement est destiné à équiper un dispositif mettant en oeuvre un frottement dans un disque d'embrayage ou de frein.

11. Installation pour la mise en oeuvre du procédé selon l'une quelconque des revendications 1 à 9, **caractérisée en ce qu'**elle comporte un poste (18) de déformation de la bande rectiligne (12) de matériau de frottement qui comporte deux rouleaux coniques adjacents (26) et d'axes (28) concourants situés dans un plan perpendiculaire au plan de défilement de la bande rectiligne et entre lesquels passe la bande.

12. Installation selon la revendication précédente **caractérisée en ce que**, en amont du poste de déformation (24), elle comporte un poste (18) de mise sous tension longitudinale qui comporte deux rouleaux cylindriques (20) d'axes (22) parallèles concourants situés dans un plan perpendiculaire au plan de défilement de la bande rectiligne et entre lesquels passe la bande.

## Patentansprüche

1. Verfahren zur Herstellung eines allgemein ringförmigen Reibbelags (10),
**dadurch gekennzeichnet, daß** es darin besteht:
- ein geradliniges Reibwerkstoffband (12) herzustellen, dessen Breite (1) in etwa gleich der Endbreite des Reibbelags ist, und anschließend
- das geradlinige Band umzuformen, um es zu einem durchgehenden Ring (10) zu gestalten.

2. Verfahren nach Anspruch 1, **dadurch gekennzeichnet, daß** es im Anschluß an die Umformung des Bands zu einem Ring darin besteht:
- das ringförmige Band in einer ringförmigen Aufnahmebahn (30, 32) aufzunehmen.

3. Verfahren nach einem der Ansprüche 1 oder 2, **dadurch gekennzeichnet, daß** es im Anschluß an die Umformung des Bands zu einem Ring darin besteht:
- die kreisförmigen Ränder (14, 16) des ringförmigen Bands gleichzeitig zu schneiden, um ein ringförmiges Band (10) mit einer bestimmten konstanten Breite zu erhalten.

4. Verfahren nach einem der Ansprüche 1 bis 3, **dadurch gekennzeichnet, daß** es im Anschluß an die Umformung des Bands zu einem Ring darin besteht:
- ein ringförmiges Bandsegment entsprechend einem vollständigen Umfang abzutrennen und anschließend
- die einander zugekehrten Enden (17) aneinanderzufügen.

5. Verfahren nach einem der vorangehenden Ansprüche, **dadurch gekennzeichnet, daß** das geradlinige Band (12) verformt wird, indem es zwischen zwei einander zugekehrten konischen Rollen (26) mit konvergenten Achsen (28) hindurchgeführt wird.

6. Verfahren nach einem der vorangehenden Ansprüche, **dadurch gekennzeichnet, daß** das geradlinige Reibwerkstoffband (12) aus einem Werkstoff ausgeführt ist, der aus einer mit einem Duroplast imprägnierten Fasermatte besteht.

7. Verfahren nach dem vorangehenden Anspruch, **dadurch gekennzeichnet, daß** der Reibwerkstoff dazu bestimmt ist, eine Naßreibungsvorrichtung auszurüsten.

8. Verfahren nach einem der vorangehenden Ansprüche, **dadurch gekennzeichnet, daß** der Reibbelag (10) ein flacher ringförmiger Reibbelag ist.

9. Verfahren nach einem der Ansprüche 1 bis 7, **dadurch gekennzeichnet, daß** der Reibbelag (10) ein kegelstumpfartiger ringförmiger Reibbelag ist.

10. Verfahren nach einem der vorangehenden Ansprüche, **dadurch gekennzeichnet, daß** der Reibwerkstoff dazu bestimmt ist, eine Reibungsvorrichtung in einer Kupplungs- oder Bremsscheibe auszurüsten.

11. Anlage zur Anwendung des Verfahrens nach einem der Ansprüche 1 bis 9, **dadurch gekennzeichnet, daß** sie eine Umformstation (18) zur Umformung des geradlinigen Reibwerkstoffbands (12) umfaßt, die zwei einander zugekehrte konische Rollen (26) mit konvergenten Achsen (28) enthält, die sich in einer Ebene senkrecht zur Ablaufebene des geradlinigen Bands befinden und zwischen denen das Band hindurchläuft.

12. Anlage nach dem vorangehenden Anspruch, **dadurch gekennzeichnet, daß** sie vor der Umformstation (24) eine Station (18) zum Einbringen von Längsspannung umfaßt, die zwei zylindrische Rollen (20) mit parallelen Achsen (22) enthält, die sich in einer Ebene senkrecht zur Ablaufebene des geradlinigen Bands befinden und zwischen denen das Band hindurchläuft.

## Claims

1. A method of making a generally annular friction liner (10), **characterised in that** it consists in:
- forming a rectilinear band (12) of friction material, the width (1) of which is substantially equal to the final width of the friction liner; then
- deforming the rectilinear band so as to configure it as a continuous annulus (10).

2. A method according to Claim 1, **characterised in that** it consists, after the band has been configured as an annulus, in:
- receiving the annular band in an annular receiving track (30, 32).

3. A method according to Claim 1 or Claim 2, **characterised in that** it consists, after configuration of the annular band, in:
- simultaneously cutting out the circular edges (14, 16) of the annular band so as to obtain an annular band (10) of predetermined constant width.

4. A method according to any one of Claims 1 to 3, **characterised in that** it consists, after the annular band (10) has been configured, in:
- cutting a sector of annular band corresponding to a complete circumference; then
- abutting the adjacent ends (17) together.

5. A method according to any one of the preceding Claims, **characterised in that** the rectilinear band (12) is deformed by passing it between two adjacent conical rollers (26) with intersecting axes (28).

6. A method according to any one of the preceding Claims, **characterised in that** the rectilinear band (12) of friction material is made from a friction material consisting of a mat of fibres impregnated with a thermosetting resin.

7. A method according to the preceding Claim, **characterised in that** the friction material is adapted for the equipment of a device which works by friction in a liquid medium.

8. A method according to any one of the preceding Claims, **characterised in that** the friction liner (10) is a flat annular liner.

9. A method according to any one of Claims 1 to 7, **characterised in that** the friction liner (10) is a frusto-conical annular liner.

10. A method according to any one of the preceding Claims, **characterised in that** the friction material is arranged for equipping a device which works by friction in a clutch or brake disc.

11. An installation for performing the method according to any one of Claims 1 to 9, **characterised in that** it includes a station (18) for deforming the rectilinear band (12) of friction material, which includes two adjacent conical rollers (26) with intersecting axes (28) situated in a plane at right angles to the plane in which the rectilinear band is advanced, and between which the band passes.

12. An installation according to the preceding Claim, **characterised in that**, upstream of the deformation station (24), it includes a station (18) for applying longitudinal tension, which comprises two cylindrical rollers (20) with intersecting parallel axes (22) situated in a plane at right angles to the plane of travel of the rectilinear band, and between which the band passes.
